Europäisches Patentamt

European Patent Office

Office européen des brevets

(11) Veröffentlichungsnummer: **0 316 807 B1**

(12) **EUROPÄISCHE PATENTSCHRIFT**

(45) Veröffentlichungstag der Patentschrift: **19.08.92**

(51) Int. Cl.⁵: **B23C** 3/16, B23C 5/10

(21) Anmeldenummer: **88118840.3**

(22) Anmeldetag: **11.11.88**

(54) **Verfahren zur Bearbeitung eines Werkstückes durch ein mindestens stirnseitig schneidendes Werkzeug.**

(30) Priorität: **20.11.87 CH 4517/87**

(43) Veröffentlichungstag der Anmeldung:
**24.05.89 Patentblatt 89/21**

(45) Bekanntmachung des Hinweises auf die
Patenterteilung:
**19.08.92 Patentblatt 92/34**

(84) Benannte Vertragsstaaten:
**AT BE CH DE ES FR GB IT LI NL SE**

(56) Entgegenhaltungen:
**BE-A- 421 049         GB-A- 586 100**
**GB-A- 1 493 236      US-A- 4 104 943**
**US-A- 4 176 992      US-A- 4 337 566**
**US-A- 4 596 501**

(73) Patentinhaber: **Starrfräsmaschinen AG**
**Seebleichestrasse 61**
**CH-9400 Rorschacherberg(CH)**

(72) Erfinder: **Hauswirth, Andreas**
**Sonnhalde 3**
**CH-9410 Heiden(CH)**
Erfinder: **Breuer, Edgar**
**Thalerstrasse 84**
**CH-9400 Rorschacherberg(CH)**

(74) Vertreter: **EGLI-EUROPEAN PATENT ATTOR-**
**NEYS**
**Horneggstrasse 4**
**CH-8008 Zürich(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 316 807 B1

# Beschreibung

Die Erfindung betrifft ein Verfahren zur abtragenden Bearbeitung einer ebenen oder konvex, konvex-konkav oder konkav gekrümmten Werkstückoberfläche durch ein mindestens stirnseitig schneidendes Werkzeug welches so zur Werkstückoberfläche ausgerichtet ist, dass es dieselbe stirnseitig berührt, siehe US-A 4 104 943.

Von den verschiedenen bekannten Verfahren zur spanenden Bearbeitung von Oberflächen eines Werkstückes ist zweifellos das Drehfräsen eines der geeignetsten Bearbeitungsverfahren, um an einem zylindrischen, meist walzen- oder scheibenförmigen Werkstück beste Oberflächengüte zu erzeugen. Solche mit diesem Verfahren erzeugte Oberflächen sind der Qualität geschliffener und polierter Werkstückoberflächen ebenbürtig und können sogar für optische Anwendungen genügen. Beispiele solcher Flächen sind Metallspiegel, Druckwalzen und ähnliche Werkstücke.

Will man somit durch Fräsen feinste Oberflächen erzielen, wird zweckmässig das Verfahren des Drehfräsens in Betracht gezogen. Es besteht allerdings die Einschränkung, dass hierzu nur Werkstücke in Frage kommen, bei welchen zylindrische, überall einen konvexen Querschnitt bis höchstens ebene Konturen aufweisende Formen mit der ebenen Stirnseite eines Fräswerkzeuges bearbeitet werden können. Mit diesem Verfahren können konkave Oberflächen an Werkstücken nicht bearbeitet werden; das bekannte Verfahren ist somit auf zylindrische bis ganz leicht ballige Werkstücke mit konvexem Querschnitt beschränkt. Müssen beliebig gekrümmte Oberflächen an Werkstücken bearbeitet werden, insbesondere solche, die auch konkave Partien aufweisen, muss ein anderes Bearbeitungsverfahren gewählt werden.

Ein in solchen Fällen häufig angewandtes, bekanntes Fräsverfahren, bei welchem ein als Kugelkopffräser bezeichneter Schaftfräser mit kugelförmigem Ende unter Verwendung von drei zueinander senkrecht stehenden translatorischen Bewegungsachsen auf ebenen oder räumlich gekrümmten Bahnen über das Werkstück geführt wird, ergibt quer zur Vorschubrichtung und auch in Richtung der letzteren eine relativ rauhe Oberfläche. Dagegen ist die Zugänglichkeit sehr gut, d.h. es bestehen nur wenig Kollisionsprobleme, worunter sich gegenseitig störende Positionen zwischen dem Fräser mit seiner Spindel und dem Werkstück mit einer allfälligen Haltevorrichtung zu verstehen sind.

Ein weiteres, bekanntes Fräsverfahren zur Bearbeitung beliebiger Oberflächen von Werkstücken ist das als Sturzfräsen bezeichnete Verfahren, das unter Benützung von fünf Bewegungsachsen durchgeführt wird. Dank der bei diesem Verfahren besseren Anschmiegung der Fräserkante an die Oberfläche des Werkstückes entsteht zwar eine deutlich geringere Seitenrauhigkeit, jedoch ergeben die Spuren der einzelnen Fräszähne in Vorschubrichtung noch eine beträchtliche Rauhigkeit. Die Zugänglichkeit ist im allgemeinen ausreichend, da die Kollisionsprobleme nur unwesentlich schlechter gelöst werden als beim dreiachsigen Verfahren mit Kugelkopffräser.

Ein weiteres Bearbeitungsverfahren für beliebige Oberflächen von Werkstücken ist das Umfang- und Flankenfräsen, das mit walzenförmigen oder scheibenförmigen Fräswerkzeugen ausgeführt wird. Beim Umfangfräsen mit einem walzenförmigen Fräswerkzeug erfolgt der Vorschub in einer Richtung, die im wesentlichen senkrecht zur Achse des Fräswerkzeuges verläuft. Je nach Ausbildung des Fräsers kann eine recht gute Rauhigkeit in Vorschubrichtung und auch quer dazu erzielt werden. Jedoch ist dadurch, dass die Fräserachse parallel oder nahezu parallel zur Werkstückoberfläche sein muss, die Zugänglichkeit wegen der auftretenden Kollisionsprobleme stark eingeschränkt. Die Anwendung dieses Verfahrens ist deshalb auf einige wenige Anwendungen beschränkt, beispielsweise auf die Bearbeitung von Turbinenschaufelblättern.

Hier setzt die Erfindung ein, der die Aufgabe zugrunde liegt, das vorstehend beschriebene Verfahren des Drehfräsens auf beliebig gekrümmte, insbesondere auf konkave Oberflächen von Werkstücken zu erweitern, so dass weitere Bearbeitungsschritte zur Oberflächenverbesserung, z.B. Schleifen oder Polieren, überflüssig werden.

Diese Aufgabe wird gemäss der Erfindung dadurch gelöst, **dass** das Werkzeug eine im wesentlichen kegel- oder kegelstumpfförmig oder kegelig konvex oder konkav ausgebildete Schneidkante aufweist und seine die Drehachse bildende Achse im wesentlichen senkrecht zur jeweiligen Vorschubrichtung ausgerichtet, dabei aber derart quer zur Vorschubrichtung geneigt wird, dass die Schneidkante das Werkstück längs einer Berührungslinie berührt.

Die Erfindung ist in der Zeichnung durch Ausführungsbeispiele dargestellt und wird anhand derselben nachfolgend beschrieben.

Es zeigen:

Fig. 1    Eine schematische Darstellung des Drehfräsens an einem walzenförmigen Werkstück mit einer konvexen Querschnittfläche nach dem Stand der Technik,

Fig. 2    Einen Schnitt längs der Linie II-II in Fig. 1,

Fig. 3    Eine schematische Darstellung des erweiterten Drehfräsverfahrens an einem Werkstück mit teilweise konkaver Querschnittsfläche,

Fig. 4    Einen Schnitt längs der Linie IV-IV,

Fig. 5    eine Seitenansicht der Anordnung nach Fig. 3,

Fig. 6    ein Ausführungsbeispiel eines Fräsers zur Durchführung des erfindungsgemässen Verfahrens,

Fig. 7    ein Ausführungsbeispiel eines Fräsers für die Bearbeitung eines abgerundeten Ueberganges zwischen zwei angrenzenden Flächen, beispielsweise zwischen Schaufelblatt und Schaufelfuss einer Turbinenschaufel, nach dem erfindungsgemässen Verfahren und

Fig. 8    ein Ausführungsbeispiel eines weiteren als Kegelstumpf ausgebildeten Fräsers zur Durchführung des erfindungsgemässen Verfahrens.

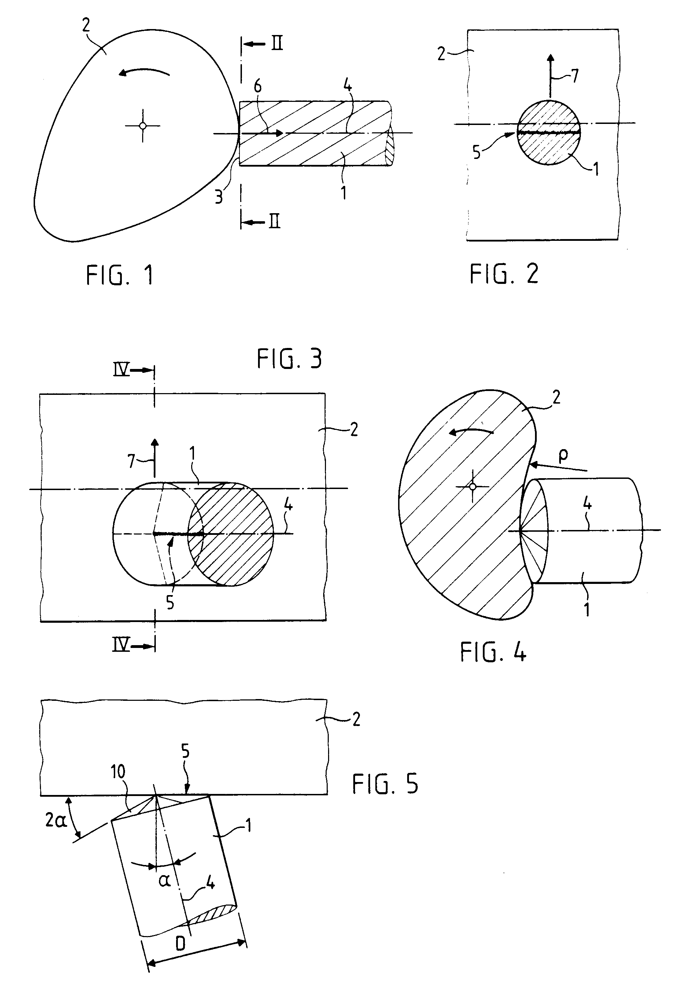

Die Erfindung geht von der Ueberlegung aus, dass das Verfahren des Drehfräsens auch für die Bearbeitung von konkaven Oberflächen von Werkstücken mit Fräsern, aber auch mit anderen abtragenden Werkzeugen erweiterbar sei. In Fig. 1 und 2 ist das bekannte Verfahren des Drehfräsens schematisch dargestellt. Es wird hierzu ein zylindrisches Werkzeug 1 verwendet, mit dessen ebener Stirnfläche 3 die Oberfläche eines zylindrischen Werkstückes 2 bearbeitet wird. Das Werkstück 2 weist ein Profil auf, dessen Querschnitt nur konvexe Partien aufweist. Beim Aufsetzen des Werkzeuges 1 auf das Werkstück 2 entsteht ein Linienkontakt in Form einer Berührungsgeraden 5. Die Berührungsgerade 5 geht zwischen dem Werkzeug 1 und dem Werkstück 2 durch die Werkzeugachse 4. Dabei fallen die Werkzeugachse 4 und die lokale Oberflächennormale 6 des Werkstückes 2 zusammen. Es besteht aber eine echte Linienberührung zwischen dem Werkzeug 1 und dem Werkstück 2, was zu feinster Oberflächenqualität der Werkstückoberfläche führt. Es ist bekannt, das Drehfräsverfahren für die Bearbeitung von Druckwalzen mit Diamantwerkzeugen einzusetzen. Hierbei erzielt man wesentlich bessere Ergebnisse bezüglich der Oberflächenqualität als durch jedes Schleifen und Polieren. Dieses Verfahren versagt aber bei konkaven Profilpartien eines Werkstückes.

In Fig. 3-5 ist nun das Stirnfräsen mit Linienkontakt auch bei konkaven Querschnittprofilen verwirklicht. Zur Erreichung eines Linienkontaktes wird die Stirnfläche 10 des Werkzeuges 1 leicht konisch geschliffen, und das Werkzeug um den Konuswinkel $\alpha$ zur Seite geneigt. Auch in diesem Fall steht die Fräserachse wie in Figur 1 und 2 im wesentlichen senkrecht zur Vorschubrichtung 7. Gemäss Fig. 3 und 5 umfasst die Berührungsgerade 5 jetzt nur noch den halben Fräserdurchmesser D, aber es findet nach wie vor eine echte Linienberührung statt. Dafür können nun konkave Krümmungsradien

$\rho$, siehe Fig. 4, bearbeitet werden. Der kleinste konkave Krümmungsradius, welcher noch bearbeitet werden kann, ergibt sich bei zylindrischen Werkstücken aus der Projektion der Kontur der Stirnfläche in Richtung der Werkstückachse mit den in Fig. 5 verwendeten Bezugszeichen zu

$$\rho_{min} = \frac{D}{2 \cdot \sin\alpha} \, .$$

Werden doppelt gekrümmte Oberflächen von Werkstücken bearbeitet, wie dies beispielsweise bei verwundenen Turbinenschaufeln der Fall ist, kann man im allgemeinen nicht mehr eine ideale Linienberührung erreichen.

Bei Werkstückoberflächen mit doppelt konvex gekrümmten Oberflächen kann die Bearbeitung mit einem kegeligen oder zylindrischen Werkzeug erfolgen. Die Anschmiegung der Stirnfläche des Werkzeuges erfolgt an die Richtung der kleinsten konvexen Krümmung.

Werden konvex-konkav gekrümmte Oberflächen bearbeitet, kann hierzu ein kegeliges Werkzeug verwendet werden, wobei die Stirnfläche des Werkzeuges der vorstehenden Formel genügen muss, mit $\rho$ entsprechend dem kleinsten vorkommenden konkaven Krümmungsradius.

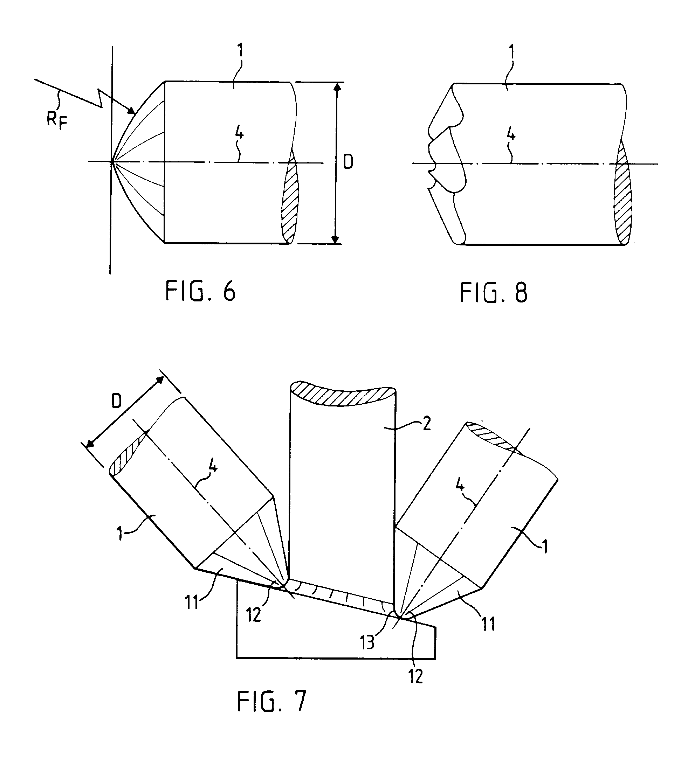

Es ist aber auch möglich, doppelt konkav gekrümmte Flächen zu bearbeiten, wobei hier ein Werkzeug zu verwenden ist, dessen kegelige Stirnfläche mit einem Flankenradius $R_F$ gerundet wird, siehe Fig. 6. Die Stirnfläche des Werkzeuges muss in solchen Fällen den Krümmungen angepasst werden, wobei $R_F$ als Wert für den kleinsten sekundären Krümmungsradius angenommen werden kann, während für den kleinsten primären Krümmungsradius die vorstehende Formel gilt. Mit primärem und sekundärem Krümmungsradius ist hier der kleine und grosse Hauptkrümmungsradius einer doppelt konkaven Fläche bezeichnet.

Ein besonderer Anwendungsfall für das beschriebene Verfahren liegt bei der Bearbeitung des Uebergangsbereiches zwischen zwei angrenzenden Flächen, beispielsweise zwischen einer Turbinenschaufel und ihrem Fuss, vor. Hier kann ein Werkzeug 1 eingesetzt werden, dessen Stirnfläche als Kegel 11 mit einem als Kugelkalotte geformten Kopf 12 ausgebildet ist. Die Bearbeitung, siehe Fig. 7, erfolgt in der Weise, dass ein Abrundungsradius 13 und eine der angrenzenden Flächen des Werkstückes gleichzeitig bearbeitet werden. Wie bei den vorstehend beschriebenen Anwendungsfällen sind auch in diesem Fall die Grenzdaten, d.h. der kleinste Wert $R_F$ und der kleinste Winkel $\alpha$ bei gegebenem Durchmesser D, für das Werkzeug zu ermitteln, wie dies vorstehend erläutert wurde.

In bestimmten Fällen kann auch ein Werkzeug eingesetzt werden, dessen Stirnfläche als Kegelstumpf mit oder ohne Mittenschneide ausgebildet ist, siehe Fig. 8.

Mit dem beschriebenen Verfahren ist es somit möglich, eine sehr gute Oberflächenqualität an Werkstücken zu erzielen, wie dies beim Drehfräsen auch der Fall ist. Es besteht allseits eine sehr gute Zugänglichkeit, denn das Werkzeug kann nach der einen oder anderen Seite geneigt werden, steht aber immer im wesentlichen senkrecht zur Werkstückoberfläche. Da nur die eine Hälfte der Werkzeugstirnfläche im Eingriff steht, können in den meisten Fällen konstante Schnittbedingungen verwirklicht werden, d.h. ein reiner Gleichlauf oder ein reiner Gegenlauf.

Bei gleichbleibender Vorschubrichtung, wie etwa bei dem dem Drehfräsen ähnlichen Rundumfräsen, bei umriss- bzw. spiralförmigen Bahnen oder beim Rahmenverfahren (Box Cycle) erhält man gleichbleibende Schnittverhältnisse durch eine gleichbleibende Neigung des Werkzeuges, z.B. - in Vorschubrichtung gesehen - immer nach rechts.

Bei wechselnder Vorschubrichtung, wie sie beim klassischen Hin-und Her-Zeilenfräsen auftritt, wird ebenfalls eine gleichbleibende Neigung bezogen auf die Vorschubrichtung eingehalten. Das bedeutet, dass bei jedem Wenden des Vorschubes die Richtung der Fräserneigung auf die entgegengesetzte Seite gekippt wird.

Der flache, nahezu tangentiale Zutritt der Werkzeugschneide zum Berührungspunkt bzw. zur Berührungslinie sowie die Tatsache, dass die Fräskraft praktisch tangential zur Werkstückoberfläche - mit nur einer kleinen Komponente senkrecht dazu - verläuft, bewirken einen ausserordentlich ruhigen und stabilen Schnitt auch bei nicht sehr stabilen Werkstücken.

Werden beliebig gekrümmte Oberflächen durch Schleifen bearbeitet, sind hierfür im allgemeinen sechs Bewegungsachsen notwendig. Beim vorliegenden Verfahren genügen fünf Bewegungsachsen, woraus eine einfachere Maschinenkonstruktion und ein einfacheres Bearbeitungsprogramm resultiert.

Die Beschreibung ist auf ein beliebiges abtragendes Werkzeug gerichtet, während in den Figuren die Werkzeuge als Fräser dargestellt sind. Sicher sind für das beschriebene Verfahren Fräswerkzeuge in verschiedenen Ausführungen besonders geeignet, jedoch ist das Verfahren nicht auf diese einzige Werkzeugart beschränkt.

**Patentansprüche**

1. Verfahren zur abtragenden Bearbeitung einer ebenen oder konvex, konvex-konkav oder konkav gekrümmten Werkstückoberfläche durch ein mindestens stirnseitig schneidendes Werkzeug (1), welches so zur Werkstückoberfläche ausgerichtet ist, dass es dieselbe stirnseitig berührt, **dadurch gekennzeichnet, dass** das Werkzeug eine im wesentlichen kegel- oder kegelstumpfförmig oder kegelig konvex oder konkav ausgebildete Schneidkante aufweist und seine die Drehachse bildende Achse (4) im wesentlichen senkrecht zur jeweiligen Vorschubrichtung (7) ausgerichtet, dabei aber derart quer zur Vorschubrichtung geneigt wird, dass die Schneidkante das Werkstück längs einer Berührungslinie (5) berührt.

2. Verfahren nach Anspruch 1, **dadurch gekennzeichnet, dass** mittels eines Werkzeugs mit kegeliger oder kegelstumpfförmiger Schneidkante eine konvex-konkave Werkstückoberfläche bearbeitet wird.

3. Verfahren nach Anspruch 1, **dadurch gekennzeichnet, dass** mittels eines Werkzeugs mit konvexer Stirnfläche eine doppelt konkave Werkstückoberfläche bearbeitet wird.

4. Verfahren nach einem der Ansprüche 1 bis 3, **dadurch gekennzeichnet, dass** die Neigung der Werkzeugachse auch eine Komponente in oder entgegen der Vorschubrichtung aufweist.

5. Verfahren nach einem der Ansprüche 1 bis 4, **dadurch gekennzeichnet, dass** das Werkzeug gegenüber dem Werkstück in bis zu fünf Bewegungsachsen bewegt wird.

**Claims**

1. Method for material-removal working of a planar or a convexly, convex-concavely or concavely curved, work piece surface by means of a tool (1) which cuts at least on its front end and which is aligned in relation to the work piece surface in such a way that it contacts the same on the front end, characterised in that the tool has a cutting edge which is formed substantially in the shape of a cone or truncated cone or so as to be conically convex or concave, and its axis (4), which forms the axis of rotation, is aligned so as to be substantially perpendicular to the respective feed direction (7), yet however is inclined transversely to the feed direction in such a way that the cutting edge contacts the work piece along a line of contact (5).

2. Method according to claim 1, characterised in that a convex-concave work piece surface is processed by means of a tool with a cutting edge which is conical or in the shape of a truncated cone.

3. Method according to claim 1, characterised in that a doubly concave work piece surface is processed by means of a tool with a convex face.

4. Method according to one of the claims 1 to 3, characterised in that the inclination of the tool axis also has a component in or opposite to the feed direction.

5. Method according to one of the claims 1 to 4, characterised in that the tool is moved in relation to the work piece in up to five axes of motion.

**Revendications**

1. Procédé d'usinage par attaque de la surface d'une pièce plane ou convexe, convexe-concave ou concave et curviligne au moyen d'un outil (1) dont le tranchant se trouve obligatoirement du côté de la tête, lequel outil est orienté par rapport à la surface de la pièce de telle sorte qu'il entre au contact de ladite pièce par l'avant, procédé caractérisé en ce que l'outil présente une arête de coupe de forme essentiellement conique ou tronconique ou conique convexe ou conique concave et que son axe (4), qui constitue l'axe de symétrie, est orienté essentiellement verticalement par rapport au sens respectif du défilement (7), tout en étant ainsi orienté transversalement par rapport au sens du défilement de telle sorte que, l'arête de coupe entre au contact de la pièce à usiner le long d'une ligne de contact (5).

2. Procédé selon la revendication 1, caractérisé en ce que l'on façonne la surface convexe-concave d'une pièce en utilisant un outil comportant une arête de coupe de forme conique ou tronconique.

3. Procédé selon la revendication 1, caractérisé en ce que l'on façonne la surface concave double d'une pièce en utilisant un outil comportant une surface extérieure de forme convexe.

4. Procédé selon l'une des revendications 1 à 3 caractérisé en ce que l'orientation de l'axe de l'outil indique également une composante qui va dans ou contre le sens du défilement.

5. Procédé selon l'une des revendications 1 à 4, caractérisé en ce que l'outil se déplace par rapport à la pièce à usiner jusqu'à cinq axes de déplacement ou plus.

FIG. 1

FIG. 2

FIG. 3

FIG. 4

FIG. 5

FIG. 6

FIG. 8

FIG. 7